# EUROPEAN PATENT APPLICATION

(11) **EP 2 050 492 A2**
(43) Date of publication of application: **22.04.2009**
(21) Application number: 08159200.8
(22) Date of filing: 27.06.2008
(51) Int. Cl.: B01D 53/94, B01J 35/04, F01N 3/022, F01N 3/28, C04B 38/00, B01D 46/24

(54) **Honeycomb structured body**

(30) Priority: 15.10.2007 WO PCT/JP2007/070096
(71) Applicant: Ibiden Co., Ltd., Ogaki-shi, Gifu 503-8604 (JP)
(72) Inventor: Kunieda, Masafumi c/o Ibiden Co., Ltd., Gifu 501-0695 (JP); Kitajima, Mari c/o Ibiden Co., Ltd., Gifu 501-0695 (JP)
(74) Representative: HOFFMANN EITLE

(57) **Abstract**

An object of the present invention is to provide a honeycomb structured body comprises a plurality of pillar-shaped honeycomb fired bodies combined with one another with an adhesive layer interposed therebetween, each of the honeycomb fired bodies having a large number of cells longitudinally placed in parallel with one another with a cell wall therebetween and an outermost peripheral face surrounded by an outer wall, wherein the cell wall has a thickness of 0.15 to 0.30 mm, a border wall formed by the adhesive layer and the outer walls of the two honeycomb fired bodies positioned on both sides of the adhesive layer, a thickness of the border wall is 5 to 20 times greater than the thickness of the cell wall, and a catalyst permeation preventive region is provided in the outer wall or between the outer wall and the adhesive layer, the catalyst permeation preventive region containing at least one kind selected from the group consisting of a water repellent material, a cation exchanger and a water absorbing material.

## Description

### TECHNICAL FIELD

This invention relates to a honeycomb structured body.

### BACKGROUND ART

Honeycomb catalysts have been used in order to convert exhaust gases discharged from internal combustion engines of vehicles, such as buses and trucks, construction machines and the like. As a conventional honeycomb catalyst, for example, there has been proposed a cordierite-based honeycomb structured body having an integral structure and a low thermal expansion with the surface supporting a catalyst metal such as platinum as well as a large specific surface area material such as activated alumina. In addition, a honeycomb catalyst having an alkali-earth metal such as Ba supported thereon as a NOₓ absorber has also been proposed, and this honeycomb catalyst is designed for use in converting NOₓ in an atmosphere with excessive oxygen, such as an atmosphere in a lean burn engine and a diesel engine.

There has been known a honeycomb structured body formed by a honeycomb fired body which is manufactured as follows: a high specific surface area material such as activated alumina, as a main raw material, is combined with inorganic fibers serving as a reinforcing material by an inorganic binder; and the obtained mixture is formed into a honeycomb shape and then fired. Also, an aggregated honeycomb structured body formed by combining a plurality of these honeycomb fired bodies with one another with an adhesive layer interposed therebetween has been known(for example, see Patent Document 1).

Patent Document 1: JP-A 2005-349378

### DISCLOSURE OF THE INVENTION PROBLEMS TO BE SOLVED BY THE INVENTION

Such a honeycomb fired body as that disclosed in Patent Document 1 has two kinds of walls formed therein. That is, the two kinds of walls are as follows: a cell wall separating adjacent cells of the honeycomb fired body; and an outer wall located at the outermost periphery of the honeycomb fired body. Here, the outermost cells of one honeycomb fired body and the outermost cells of an adjacent honeycomb fired body are separated from one another by a wall formed the outer wall of the one honeycomb fired body, the adhesive layer and the outer wall of the adjacent honeycomb fired body joined together. With reference to the figures, the following description will discuss the wall that separates the outermost cells of one honeycomb fired body and the outermost cells of an adjacent honeycomb fired body.

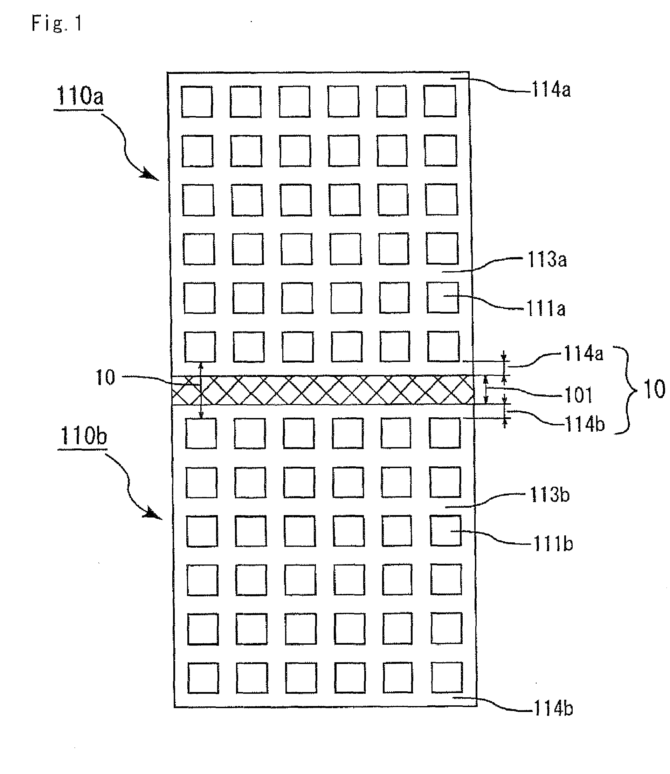

Fig. 1 is a front view showing a part of an end face of an aggregated honeycomb structured body. In Fig. 1, two honeycomb fired bodies 110a and 110b are bonded to each other with an adhesive layer 101 interposed therebetween.
The honeycomb fired body 110a shown above in the figure has a structure in which each of cells 111a are separated from one another by a cell wall 113a and an outer wall 114a is located at its outermost periphery. In the same manner, in the honeycomb fired body 110b shown below in the figure, each of cells 111b are separated by a cell wall 113b and an outer wall 114b is located at its outermost periphery. In addition, an adhesive layer 101 is provided between the outer wall 114a and the outer wall 114b. A wall 10 is indicated by an arrow with two heads in Fig. 1 and formed by the outer wall 114a, the adhesive layer 101 and the outer wall 114b joined together. The wall 10 corresponds to a wall that separates the outermost cells of one honeycomb fired body and the outermost cells of an adjacent honeycomb fired body. In the present description, this wall is referred to as a border wall. In the present description, the thickness of the border wall is defined as a distance between the outermost cell of one honeycomb fired body and the outermost cell of an adjacent honeycomb fired body (that is, the length of an arrow with two heads shown on the left side of Fig. 1). Based upon the above-mentioned definition, the aggregated honeycomb structured body has two kinds of walls as walls separating the adjacent cells, that is, the cell wall and the border wall.

In order to use the aggregated honeycomb structured body as a catalyst supporting carrier, a catalyst needs to be supported on the cell wall and the border wall, both located around cells through which exhaust gases are allowed to pass. Thus, the exhaust gas is allowed to make contact with the supported catalyst so as to be converted.

Normally, a catalyst is supported on a honeycomb structured body by immersing the honeycomb structured body in a catalyst solution containing a catalyst metal and the like. Since the catalyst solution uniformly permeates the cell wall and the border wall, the catalyst is presumed to be uniformly supported on the cell wall and the border wall of the honeycomb structured body.

Here, since both ends of each of cells of the honeycomb structured body to be used as the catalyst supporting carrier are normally open, most of exhaust gases that have flowed into one cell from one of the end faces of the catalyst supporting carrier are allowed to flow out of the other end face of the same cell, without passing through either the cell wall or the border wall. Accordingly, the exhaust gases are allowed to make contact with the catalyst almost only in limited regions of the cell wall and the border wall, that is, regions thereof each having a short distance from the surface of the cell wall or the border wall. Consequently, the catalyst supported on regions other than the regions each having a short distance from the surface of the cell wall or the outer wall hardly makes contact with the exhaust gases, and is considered to be a catalyst that does not contribute to an exhaust-gas converting reaction.

However, as described above, the honeycomb structured body normally used has the cell wall and the border wall on which the catalyst is uniformly supported, and is considered to wastefully have a large amount of the catalyst that does not contribute to the exhaust-gas converting reaction. Since the catalyst metals are expensive and valuable metals, such as platinum, supporting a catalyst in such a wasteful manner causes a problem of the wasteful consumption of valuable resources, in addition to an increase in the manufacturing costs.

In particular, the thickness of the border wall is the total thickness of the two outer walls and the adhesive layer, so that the border wall is much thicker compared to the cell wall. As a result, in particular, most of the catalyst supported on the border wall, out of the catalyst uniformly supported on the honeycomb structured body, is presumed to wastefully fail to contribute to the exhaust-gas converting reaction.
For this reason, the catalyst is desired to be supported in such a way as to reduce the amount of the catalyst to be wastefully supported on the border wall.

Moreover, a thick cell wall is presumed to have a higher proportion of the catalyst that does not contribute to the exhaust-gas converting reaction out of the catalyst supported on the cell wall. Therefore, the cell wall needs to be designed to have as small a thickness as possible.

The present invention has been devised to solve these problems, and its object is to provide a honeycomb structured body in which it is possible to support a catalyst in such a way as to reduce the catalyst wastefully supported on the cell wall and the border wall.

### MEANS FOR SOLVING THE PROBLEMS

The honeycomb structured body according to claim 1 is a honeycomb structured body comprising: a plurality of pillar-shaped honeycomb fired bodies combined with one another with an adhesive layer interposed therebetween, each of the honeycomb fired bodies having a large number of cells longitudinally placed in parallel with one another with a cell wall therebetween and an outermost peripheral face surrounded by an outer wall, wherein the cell wall has a thickness of 0.15 to 0.30 mm, a border wall formed by the adhesive layer and the outer walls of the two honeycomb fired bodies positioned on both sides of the adhesive layer, a thickness of the border wall is 5 to 20 times greater than the thickness of the cell wall, and a catalyst permeation preventive region is provided in the outer wall or between the outer wall and the adhesive layer, the catalyst permeation preventive region containing at least one kind selected from the group consisting of a water repellent material, a cation exchanger and a water absorbing material.

In the honeycomb structured body according to claim 1, the thickness of the cell wall is 0.15 to 0.30 mm. The cell wall having a thickness of 0.15 mm or more is provided with sufficient strength. Moreover, since the cell wall is designed to have a thickness of 0.30 mm or less, the entire cell wall serves as a region that has a short distance from the surface of the cell wall. Therefore, it is possible to support a catalyst on the cell wall in such a manner that most of the catalyst supported on the cell wall is allowed to contribute to the exhaust-gas converting reaction. As a result, it is possible to provide a honeycomb structured body having a smaller amount of the catalyst wastefully supported on the cell wall .

Furthermore, the thickness of the border wall is 5 to 20 times greater than that of the cell wall. In a honeycomb structured body in which the thickness of the border wall is less than 5 times the thickness of the cell wall, the adhesive layer is too thin. As a result, the adhesive strength between the mutual honeycomb fired bodies is likely to be insufficient. In addition, in a honeycomb structured body in which the thickness of the border wall exceeds 20 times the thickness of the cell wall, the opening area (aperture ratio) of the cells is smaller, possibly. As a result, performance thereof as an exhaust-gas converting catalyst supporting carrier is likely to decrease.

Moreover, the catalyst permeation preventive region is provided in the outer wall or between the outer wall and the adhesive layer, out of the border wall, the catalyst permeation preventive region containing at least one kind selected from the group consisting of a water repellent material, a cation exchanger and a water absorbing material.

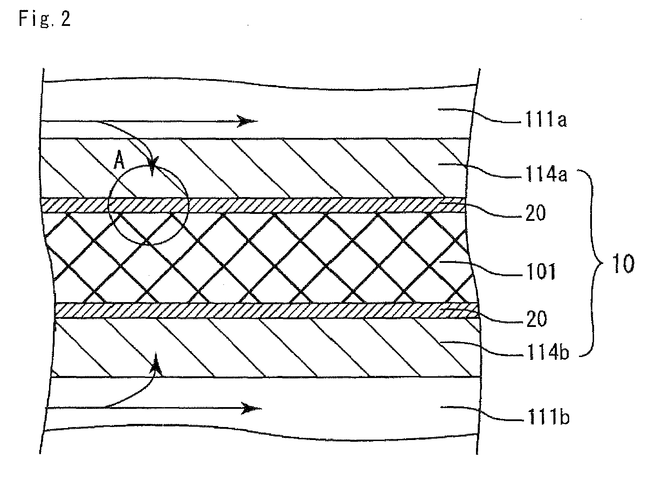

Fig. 2 is a schematic cross-sectional view of the neighborhood of a border wall obtained by cutting one example of a honeycomb structured body having a catalyst permeation preventive region, in parallel with its longitudinal direction. In the honeycomb structured body shown in Fig. 2, catalyst permeation preventive regions 20 are formed between the adhesive layer 101 and the outer wall 114a, and between the adhesive layer 101 and the outer wall 114b, respectively. Here, the thickness of the border wall 10 corresponds to the sum of the thicknesses of the outer wall 114a, the catalyst permeation preventive region 20, the adhesive layer 101, the catalyst permeation preventive region 20 and the outer wall 114b in descending order shown in Fig. 2.

In Fig. 2, the direction in which a catalyst solution flows is schematically indicated by an arrow.
When the honeycomb structured body is immersed in the catalyst solution to support the catalyst thereon, the catalyst solution first flows into the cells 111a and 111b, and then permeates the outer walls 114a and 114b adjacent to the cells 111a and 111b. Here, the catalyst permeation preventive region 20 provided in the honeycomb structured body is designed to prevent the catalyst metal in the catalyst solution that has permeated the outer walls 114a and 114b from further permeating the adhesive layer.

The component contained in the catalyst permeation preventive region functions to prevent a catalyst such as a catalyst metal from permeating the adhesive layer from the outer wall, upon immersion of the honeycomb structured body in the catalyst solution containing the catalyst. Therefore, in the case where the honeycomb structured body according to claim 1 is immersed in the catalyst solution, although the catalyst is allowed to permeate the outer wall of the honeycomb fired body or the boundary between the outer wall and the adhesive layer of the honeycomb fired body, the catalyst is prevented from further permeating the adhesive layer. Therefore, the honeycomb structured body according to claim 1 is prepared as a honeycomb structured body in which a catalyst is supported in such a manner that the adhesive layer have no catalyst supported thereon. Here, the catalyst permeation preventive region is preferably formed as a layered region containing the above-mentioned component. However, the region is not limited to have a layered structure as long as it contains the above-mentioned components, and it may be prepared as a region in which a region containing the above-mentioned component and a region without the above-mentioned component contained therein are discontinuously distributed. Moreover, the catalyst permeation preventive region may be provided in the outer wall of the honeycomb fired body. The case in which the catalyst permeation preventive region is provided in the outer wall of the honeycomb fired body will be described later.

Since the outer wall portions of the border wall of the honeycomb fired body correspond to a region each having a short distance from the surface of the outer wall, the catalyst supported on the outer wall serves as the catalyst that contributes to the exhaust-gas converting reaction. In contrast, since the adhesive layer of the border wall corresponds to a region having a long distance from the surface of the outer wall, the catalyst supported on the adhesive layer wastefully fails to contribute to the exhaust-gas converting reaction. However, since no catalyst is supported on the adhesive layer of the honeycomb structured body according to claim 1, the catalyst is not wastefully supported thereon.

Therefore, in the honeycomb structured body according to claim 1, a catalyst is supported in such a way as to reduce the catalyst wastefully supported on the border wall. As a result, it is possible to reduce the amount of the catalyst that is wastefully supported on the entire honeycomb structured body.

In the honeycomb structured body according to claim 2, the catalyst permeation preventive region contains the water repellent material and the water repellent material comprises silicone oil, wax, or glass.

In the catalyst permeation preventive region containing the water repellent material, the water repellent material serves as a blocking wall (barrier) so as to prevent a catalyst solution from permeating the adhesive layer of the honeycomb fired body from the outer wall thereof. For this reason, it is possible to reduce the amount of the catalyst that is wastefully supported on the border wall by preventing the catalyst from being supported on the adhesive layer. With reference to the figure, the following description will discuss the functions of the water repellent material.

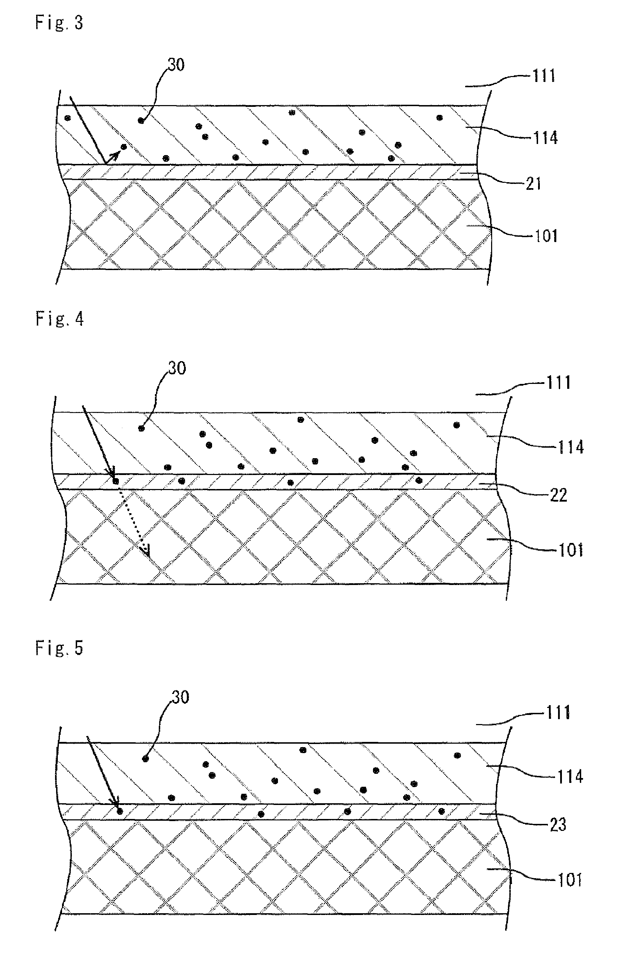

Fig. 3 is a schematic cross-sectional view showing the neighborhood of a catalyst permeation preventive region obtained by cutting one example of a honeycomb structured body having the catalyst permeation preventive region containing the water repellent material, in parallel with its longitudinal direction. Here, the region shown in Fig. 3 is obtained by enlarging the portion indicated by A in Fig. 2. Moreover, in the honeycomb structured body shown in Fig. 3, a catalyst permeation preventive region 21 containing the water repellent material is provided between the outer wall 114 and the adhesive layer 101.

In Fig. 3, an arrow indicated by a solid line shows a flow of a catalyst solution containing a catalyst metal.
When the honeycomb structured body, shown in Fig. 3, is immersed in the catalyst solution, the catalyst solution permeates the outer wall 114 from the cell 111 so that a catalyst metal 30 contained in the catalyst solution is gradually supported on the outer wall 114. Subsequently, the catalyst solution that has permeated the deepest end (downward in Fig. 3) of the outer wall 114, makes contact with the catalyst permeation preventive region 21 containing the water repellent material. Here, the catalyst permeation preventive region 21 contains the water repellent material including silicone oil, wax, or glass. These water repellent materials have such a property that it repels water upon contact with water. For this reason, the contact of the catalyst solution with the catalyst permeation preventive region 21 results in repelling of the catalyst solution by the water repellent material contained in the catalyst permeation preventive region 21. As a result, the catalyst solution fails to permeate the catalyst permeation preventive region 21, and also fails to further permeate the adhesive layer 101 located ahead of the catalyst permeation preventive region 21. Therefore, no catalyst metal 30 is allowed to reach the adhesive layer 101 so that it is possible to prevent the catalyst metal 30 from being supported on the adhesive layer 101.

In the honeycomb structured body according to claim 3, the catalyst permeation preventive region contains the cation exchanger and the cation exchanger comprises a phenolic resin.

In the catalyst permeation preventive region containing the cation exchanger, since cations contained in a catalyst metal and the like make contact with the cation exchanger so as to be absorbed by the cation exchanger, it is possible to prevent the catalyst metal from permeating the adhesive layer of the honeycomb fired body from the outer wall thereof. For this reason, it is possible to reduce the amount of the catalyst that is wastefully supported on the border wall by preventing the catalyst from being supported on the adhesive layer. With reference to the figure, the following description will discuss the functions of the cation exchanger.

Fig. 4 is a schematic cross-sectional view showing the neighborhood of a catalyst permeation preventive region obtained by cutting one example of a honeycomb structured body having the catalyst permeation preventive region containing the cation exchanger, in parallel with its longitudinal direction. Here, the region shown in Fig. 4 is obtained by enlarging the portion indicated by A in Fig. 2. Here, in the honeycomb structured body shown in Fig. 4, a catalyst permeation preventive region 22 containing the cation exchanger is provided between the outer wall 114 and the adhesive layer 101.

In Fig. 4, an arrow indicated by a solid line shows a flow of a catalyst solution containing a catalyst metal, while an arrow indicated by a dotted line shows a flow of a solution without the catalyst metal contained therein.
When the honeycomb structured body, shown in Fig. 4, is immersed in the catalyst solution, the catalyst solution permeates the outer wall 114 from the cell 111 so that the catalyst metal 30 contained in the catalyst solution is gradually supported on the outer wall 114. Subsequently, the catalyst solution that has permeated the deepest end (downward in Fig. 4) of the outer wall 114 is allowed to further permeate the catalyst permeation preventive region 22 containing the cation exchanger. Here, the catalyst permeation preventive region 22 contains the cation exchanger including a phenolic resin and the like. The catalyst metal 30 is contained in the catalyst solution as cations. Therefore, when the catalyst metal 30 makes contact with the cation exchanger, the cations, contained in the cation exchanger, are exchanged by the catalyst metal 30. Consequently, the catalyst metal 30 is combined with the cation exchanger so as to remain in the catalyst permeation preventive region 22. Therefore, since the catalyst metal 30 is not allowed to reach the adhesive layer 101 located ahead of the catalyst permeation preventive region 22, it is possible to prevent the catalyst metal 30 from being supported on the adhesive layer 101.

In the honeycomb structured body according to claim 4, the catalyst permeation preventive region contains the water absorbing material and the water absorbing material comprises montmorillonite, saponite, vermiculite, a high porosity adhesive, or a water absorbing polymer.

In the catalyst permeation preventive region containing the water absorbing material, a catalyst solution is captured by the water absorbing material, upon contact with the water absorbing material, so that it is possible to prevent a catalyst metal from permeating the adhesive layer of the honeycomb fired body from the outer wall thereof. For this reason, it is possible to reduce the amount of the catalyst that is wastefully supported on the border wall by preventing the catalyst from being supported on the adhesive layer. With reference to the figure, the following description will discuss the functions of the water absorbing material.

Fig. 5 is a schematic cross-sectional view showing the neighborhood of a catalyst permeation preventive region obtained by cutting one example of a honeycomb structured body having the catalyst permeation preventive region containing the water absorbing material, in parallel with its longitudinal direction. Here, the region shown in Fig. 5 is obtained by enlarging the portion indicated by A in Fig. 2. Moreover, in the honeycomb structured body shown in Fig. 5, a catalyst permeation preventive region 23 containing the water absorbing material is provided between the outer wall 114 and the adhesive layer 101.

In Fig. 5, an arrow indicated by a solid line shows a flow of a catalyst solution containing a catalyst metal.
When the honeycomb structured body shown in Fig. 5 is immersed in the catalyst solution, the catalyst solution permeates the outer wall 114 from the cell 111 so that the catalyst metal 30 contained in the catalyst solution is gradually supported on the outer wall 114. Subsequently, the catalyst solution that has permeated the deepest end (downward in Fig. 5) of the outer wall 114 is allowed to further permeate the catalyst permeation preventive region 23 containing the water absorbing material. Here, the catalyst permeation preventive region 23 contains the water absorbing material including montmorillonite, saponite, vermiculite, a high porosity adhesive or a water absorbing polymer. These water absorbing materials have such a property that, upon contact with water, they absorb water so as to prevent water from being discharged outside the water absorbing material. Therefore, in the case where an aqueous solution containing a catalyst metal makes contact with any of these water absorbing materials, since the catalyst metal is absorbed in the water absorbing material together with water, the catalyst metal 30, which has made contact with the catalyst permeation preventive region 23, remains in the catalyst permeation preventive region 23 together with water.
Therefore, since the catalyst metal 30 is not allowed to reach the adhesive layer 101 located ahead of the catalyst permeation preventive region 23, it is possible to prevent the catalyst metal 30 from being supported on the adhesive layer 101.

In the honeycomb structured body according to claim 5, the honeycomb fired body comprises inorganic particles, inorganic fibers and/or whiskers and an inorganic binder. In the honeycomb structured body according to claim 6, the inorganic particles comprise at least one kind selected from the group consisting of alumina, silica, zirconia, titania, ceria, mullite and zeolite. In the honeycomb structured body according to claim 7, the inorganic fibers and/or whiskers comprise at least one kind selected from the group consisting of alumina, silica, silicon carbide, silica-alumina, glass, potassium titanate and aluminum borate.
In the honeycomb structured body according to claim 8, the inorganic binder comprises at least one kind selected from the group consisting of alumina sol, silica sol, titania sol, water glass, sepiolite and attapulgite. Each of the honeycomb fired bodies including these materials according to any of claims 5 to 8 has a high specific surface area and sufficient strength so that a honeycomb structured body formed by these honeycomb fired bodies can be suitably used as a catalyst supporting carrier.

The honeycomb structured body according to claim 9 is a honeycomb structured body comprising a plurality of pillar-shaped honeycomb fired bodies combined with one another with an adhesive layer interposed therebetween, each of the honeycomb fired bodies having a large number of cells longitudinally placed in parallel with one another with a cell wall therebetween and an outermost peripheral face surrounded by an outer wall, wherein the cell wall has a thickness of 0.15 to 0.30 mm, a border wall, formed by the adhesive layer and the outer walls of the two honeycomb fired bodies positioned on both sides of the adhesive layer, a thickness of the border wall is 5 to 20 times greater than the thickness of the cell wall, and the adhesive layer contains a water repellent material.

In the honeycomb structured body according to claim 9, when the honeycomb structured body is immersed in a catalyst solution, the catalyst solution permeates a contacting region of the adhesive layer with the outer wall of the honeycomb fired body. However, since the adhesive layer contains the water repellent material, the water repellent material serves as a blocking wall (barrier) so as to prevent the catalyst solution from permeating the inside of the adhesive layer. Thus, it is possible to reduce the amount of the catalyst that is wastefully supported on the border wall by preventing the catalyst from being supported on the inside of the adhesive layer. With reference to the figure, the following description will discuss the functions of the adhesive layer containing such a water repellent material.

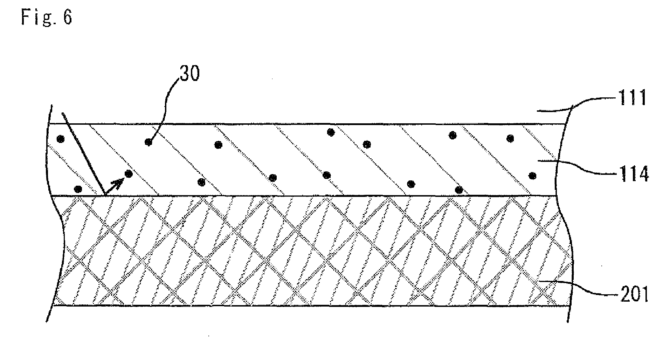

Fig. 6 is a schematic cross-sectional view showing the neighborhood of an adhesive layer obtained by cutting one example of a honeycomb structured body having an adhesive layer containing the water repellent material, in parallel with its longitudinal direction.

In Fig. 6, an arrow indicated by a solid line shows a flow of a catalyst solution containing a catalyst metal.
When the honeycomb structured body shown in Fig. 6 is immersed in the catalyst solution, the catalyst solution permeates the outer wall 114 from the cell 111 so that the catalyst metal 30 contained in the catalyst solution is gradually supported on the outer wall 114. Moreover, the catalyst solution that has permeated the deepest end (downward in Fig. 6) of the outer wall 114 makes contact with an adhesive layer 201 containing the water repellent material. Here, the adhesive layer 201 contains the water repellent material, and the water repellent material has such a property that it repels water upon contact with water. For this reason, the contact of the catalyst solution with the water repellent material results in repelling of the catalyst solution by the water repellent material contained in the adhesive layer 201. As a result, the catalyst solution fails to permeate the adhesive layer 201.
Therefore, no catalyst metal 30 is allowed to reach the adhesive layer 201, so that it is possible to prevent the catalyst metal 30 from being supported on the adhesive layer 201.

In the honeycomb structured body according to claim 10, the water repellent material comprises silicone oil, wax, or glass.
The water repellent material including any of these substances makes it possible to desirably prevent a catalyst solution from permeating the inside of the adhesive layer, and consequently to desirably prevent the catalyst from being supported on the inside of the adhesive layer.

In the honeycomb structured body according to claim 11, the honeycomb fired body comprises inorganic particles, inorganic fibers and/or whiskers and an inorganic binder. Moreover, in the honeycomb structured body according to claim 12, the inorganic particles comprise at least one kind selected from the group consisting of alumina, silica, zirconia, titania, ceria, mullite and zeolite. In the honeycomb structured body according to claim 13, the inorganic fibers and/or whiskers comprise at least one kind selected from the group consisting of alumina, silica, silicon carbide, silica-alumina, glass, potassium titanate and aluminum borate.
In the honeycomb structured body according to claim 14, the inorganic fibers and/or whiskers comprise at least one kind selected from the group consisting of alumina, silica, silicon carbide, silica-alumina, glass, potassium titanate and aluminum borate.
Each of the honeycomb fired bodies including these substances according to any of claims 11 to 14 has a high specific surface area and sufficient strength so that a honeycomb structured body formed by these honeycomb fired bodies can be suitably used as a catalyst supporting carrier.

### BEST MODE FOR CARRYING OUT THE INVENTION

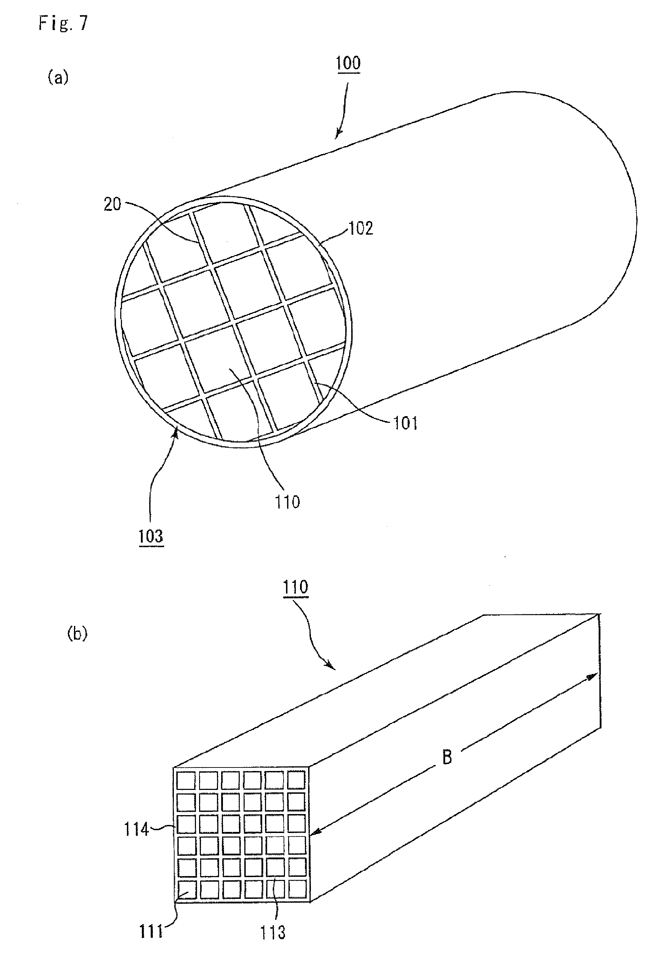

(FIRST EMBODIMENT) With reference to the figures, the following description will describe the first embodiment that is one embodiment of the honeycomb structured body according to the present invention and the method for manufacturing the honeycomb structured body. Fig. 7 (a) is a perspective view schematically showing one example of the honeycomb structured body of the present invention, and Fig. 7(b) is a perspective view schematically showing one example of a honeycomb fired body. In the honeycomb structured body 100 shown in Fig. 7 (a), a plurality of square pillar-shaped honeycomb fired bodies 110 which comprise a porous ceramic shown in Fig. 7 (b) , are combined with one another by interposing an adhesive layer 101 to form a ceramic block 103, with a coat layer 102 formed on the periphery of the ceramic block 103. Moreover, a catalyst permeation preventive region is provided between the adhesive layer 101 and the honeycomb fired body 110.

In the honeycomb fired body 110, shown in Fig. 7(b), a large number of cells 111 are aligned side by side in the longitudinal direction (in a direction indicated by an arrow B in Fig. 7(b)) with a cell wall 113 interposed therebetween. Here, an outer wall 114 is formed on the outermost periphery of the honeycomb fired body 110. A fluid such as exhaust gases and the like is allowed to flow through the cells 111, and a catalyst used for converting the exhaust gases can be supported on the cell wall 113 and the outer wall 114. Therefore, when the exhaust gases are allowed to flow through the cells 111, with the catalyst supported on the cell wall 113 and the outer wall 114, toxic components contained in the exhaust gases flowing through the cells 111 are converted by functions of the catalyst supported thereon.

In the present embodiment, the thickness of the cell wall of the honeycomb fired body is 0.15 to 0.30 mm. In addition, the thickness of the border wall is 5 to 20 times greater than that of the cell wall. Here, the thickness of the border wall includes the thickness of the catalyst permeation preventive region. Although not particularly limited, the thickness of the catalyst permeation preventive region located between the adhesive layer and the outer wall of the honeycomb fired body is preferably 5 µm or more, more preferably 10 µm or more, further more preferably 30 µm or more. In the case when the thickness of the catalyst permeation preventive region is too thin, its catalyst permeation preventive functions tend to be insufficient.
The thickness of the catalyst permeation preventive region is preferably equal to or less than the thickness of the cell wall. In the case where the thickness of the catalyst permeation preventive region is too thick, the thickness of the adhesive layer is thinner. As a result, the adhesive strength is likely to decrease.

Moreover, in the present embodiment, the thickness of the adhesive layer is preferably 0.5 to 5 mm. The adhesive layer having a thickness of less than 0.5 mm is unlikely to provide sufficient adhesive strength. Moreover, since the adhesive layer corresponds to a portion that does not function as a catalyst supporting carrier, the thickness of more than 5 mm tends to cause a reduction in a specific surface area of the honeycomb structured body per unit volume. Consequently, it may result in insufficient high dispersion of the catalyst, in use of the honeycomb structured body as a catalyst supporting carrier for converting exhaust gases. Moreover, the adhesive layer having a thickness of more than 5 mm tends to cause a high pressure loss.

In the honeycomb structured body of the present embodiment, the catalyst permeation preventive region is located between the adhesive layer and the outer wall of the honeycomb fired body, and the catalyst permeation preventive region contains at least one kind of a substance selected from the group consisting of a water repellent material, a cation exchanger and a water absorbing material.

With respect to the water repellent material, although not particularly limited as long as it can prevent a catalyst solution from permeating the adhesive layer, examples thereof include silicane oil, wax, glass and the like.

With respect to the cation exchanger, although not particularly limited as long as, upon contact with a catalyst solution containing a catalyst metal, it absorbs the catalyst metal as a cation by combining therewith to prevent the catalyst metal from permeating the adhesive layer, examples thereof include a phenolic resin and the like.

With respect to the water absorbing material, although not particularly limited as long as, upon contact with the catalyst solution, it absorbs the catalyst metal and water to prevent the absorbed water and catalyst metal from being discharged outside of the water absorbing material toward the adhesive layer, examples of thereof include montmorillonite, saponite, vermiculite, a high porosity adhesive, a water absorbing polymer and the like. Out of these, montmorillonite, saponite and vermiculite are more preferably used, due to their high heat resistance. Here, since the detailed functions of the catalyst permeation preventive region located between the adhesive layer and the outer wall of the honeycomb fired body have already been described, the explanation thereof will be omitted.

Although not particularly limited, the composition of the honeycomb fired body preferably includes inorganic particles, inorganic fibers and/or whiskers and an inorganic binder. Since the inorganic particles improve the specific surface area, the honeycomb fired body is more suitably used as the catalyst supporting carrier. In addition, the inorganic fibers and/or whiskers improve the strength of the honeycomb fired body.

Examples of the inorganic particles include particles including alumina, silica, zirconia, titania, ceria, mullite, zeolite or the like. Each of these particles may be used alone, or two or more kinds of these may be used in combination. Out of these, in particular, alumina particles and ceria particles are preferably used.

Examples of the inorganic fibers and/or whiskers include inorganic fibers including alumina, silica, silicon carbide, silica-alumina, glass, potassium titanate and the like. Each of these may be used alone, or two or more kinds of these may be used in combination. Out of the above-mentioned inorganic fibers and/or whiskers, aluminum borate whiskers are more preferably used. Here, in the present description, the inorganic fibers and whiskers are referred to as those having an average aspect ratio (length/diameter) of more than 5. Moreover, the preferable average aspect ratio of the inorganic fibers and whiskers is 10 to 1000.

With respect to the inorganic binder contained in the honeycomb fired body, inorganic sol, clay-based binder and the like may be used, and specific examples of the inorganic sol include alumina sol, silica sol, titania sol, water glass and the like. Moreover, specific examples of the clay-based binder include clays of the polychain-type structure, such as white clay, kaolin, montmorillonite, sepiolite and attapulgite, and the like. Each of these may be used alone, or two or more kinds of these may be used in combination. Out of these, at least one kind selected from a group consisting of alumina sol, silica sol, titania sol, water glass, sepiolite and attapulgite is preferably used. The inorganic sol, the clay-based binder and the like contain moisture, and the moisture contained therein is removed by heating and the like to obtain remaining inorganic components as an inorganic binder.

Moreover, the adhesive layer is preferably formed by using as its raw material an adhesive paste containing the above-mentioned inorganic particles, inorganic fibers and/or whiskers, inorganic binder and an organic binder.

Although not particularly limited, examples of the organic binder include polyvinyl alcohol, methylcellulose, ethylcellulose, carboxy methylcellulose and the like.

Although not particularly limited, examples of the catalyst (catalyst metal) to be supported on the honeycomb structured body of the present embodiment include noble metal, alkali metal, alkali earth metal and the like. Each of these may be used alone, or two or more kinds of these may be used in combination.

Examples of the noble metal are platinum, palladium, rhodium and the like, examples of the alkali metal is potassium, sodium and the like, and examples of the alkali earth metal is barium and the like.

Moreover, with respect to the application of the honeycomb structured body (honeycomb catalyst) having the above-mentioned catalyst supported thereon, although not particularly limited, examples thereof is a so-called three-way catalyst or NOₓ-absorbing catalyst, which are used for converting exhaust gases from a vehicle.

The following description will discuss the method for manufacturing the honeycomb structured body of the present embodiment. First, a raw material composition is prepared. Subsequently, a molding process is carried out on the raw material composition so as to manufacture a honeycomb molded body formed into a predetermined shape through extrusion-molding. As the raw material composition, a raw material prepared by using the inorganic particles, the inorganic fibers and/or whiskers as its main components to which the inorganic binder, organic binder, dispersant and a forming auxiliary are added on demand depending on its moldability, may be used.

Next, the honeycomb molded body thus manufactured is cut into a predetermined length, and a drying process is carried out by using a microwave drying apparatus, a hot-air drying apparatus, a dielectric drying apparatus, a reduced-pressure drying apparatus, a vacuum drying apparatus, a freeze drying apparatus and the like.

Then, a degreasing process is carried out on to remove the organic components therein by heating the honeycomb molded body in a degreasing furnace. Although the degreasing conditions are not particularly limited and selected on demand depending on kinds and amounts of the organic components contained in the molded body, the preferable conditions are follows: at a temperature of about 400°C; and for about two hours.

Next, a firing process is carried out on the honeycomb molded body that has been degreased. Although the firing condition is not particularly limited, the preferable condition is 500 to 1200°C, the more preferable condition is 600 to 1000°C. A pillar-shaped honeycomb fired body in which a large number of cells are longitudinally placed in parallel with one another with a cell wall therebetween can be manufactured by carrying out the above-mentioned processes. Here, in the present description, the shape indicated by the word "pillar" refers to any desired shape of a pillar including a round pillar, an oval pillar, a polygonal pillar and the like.

Next, a process for forming a catalyst permeation preventive region is carried out. In the present embodiment, in order to form the catalyst permeation preventive region between the adhesive layer and the outer wall of the honeycomb fired body, a base layer for preventing catalyst permeation is formed on the peripheral face of the honeycomb fired body. First, alumina powders as the inorganic particles and silica sol as the inorganic binder are mixed, and kneaded to obtain a paste material. Then, this paste material is applied to each peripheral face of the honeycomb fired body to form the base layer for preventing catalyst permeation on the peripheral face of the honeycomb fired body.

Separately, a solution (slurry) containing any of the water repellent material, the cation exchanger and the water absorbing material is prepared. Here, in the case where a substance, which is a liquid at a normal temperature, such as silicone oil is used as the solution, it is not necessary to prepare the solution separately; however, in the case where a substance that is a solid at a normal temperature is used, the substance is mixed with water to prepare an aqueous solution. In the case where a substance that is insoluble to water is used, the solid substance is finely pulverized and then mixed with water to prepare a uniform slurry-state solution.

Subsequently, any of these solutions is applied to the base layer for preventing catalyst permeation so that the water repellent material, the cation exchanger, or the water absorbing material permeates the base layer for preventing catalyst permeation. Lastly, by drying the honeycomb fired body at a temperature of 100 to 150°C, the moisture contained in the base layer for preventing catalyst permeation is removed so that the catalyst permeation preventive region containing any of the water repellent material, the cation exchanger and the water absorbing material is formed on each peripheral face of the honeycomb fired body.

Next, a combining process of honeycomb fired bodies is carried out to bond the honeycomb fired bodies each having the catalyst permeation preventive region formed on each peripheral face thereof, with the adhesive layer interposed therebetween. The process for mutually bonding the honeycomb fired bodies is carried out by using, for example, the following methods: a method in which the honeycomb fired bodies are successively piled up one after another after an adhesive paste is applied to the side face of the honeycomb fired body where the catalyst permeation preventive region is formed to form the adhesive paste layer thereon; a method in which the adhesive paste is injected between the respective honeycomb fired bodies (between the catalyst permeation preventive regions) after the respective honeycomb fired bodies have been temporarily secured into a molding frame having virtually the same shape as the shape of a ceramic block to be formed; or the like.

Examples of the adhesive paste include a mixture of the inorganic binder and the inorganic particles, a mixture of the inorganic binder, the inorganic fibers and/or whiskers, a mixture of the inorganic binder, the inorganic particles and the inorganic fibers and/or whiskers, and the like. Moreover, an organic binder may be added to the above-mentioned adhesive pastes.

Then, the adhesive paste layer is dried and solidified to form the adhesive layer. The ceramic block having the honeycomb fired bodies mutually bonded to one another can be manufactured by carrying out the above-mentioned processes, with the catalyst permeation preventive regions being simultaneously formed between the adhesive layer and the outer wall of the honeycomb fired body. Additionally, if necessary, a cutting process, a grinding process and the like are carried out on the manufactured ceramic block.

Next, a sealing material paste is applied to the peripheral face of the ceramic block, dried and solidified to form a coat layer so that a honeycomb structured body is manufactured. By forming the coat layer, the peripheral face of the ceramic block can be protected, and the strength of the honeycomb structured body is consequently improved. Here, it is not necessarily required to form the coat layer, and the coat layer may be formed, if necessary.

Although not particularly limited, the sealing material paste may include the same material as that of the adhesive paste, or may include a different material. In the case where the sealing material paste include the same material as that of the adhesive paste, the blending ratio of the composition of the both may be the same or different.

The following description will summarize the effects of the honeycomb structured body of the present embodiment. (1) In the honeycomb structured body of the present embodiment, a catalyst permeation preventive region is formed between the adhesive layer and the outer wall of the honeycomb fired body. The component contained in the catalyst permeation preventive region functions to prevent the catalyst metal from permeating the adhesive layer from the outer wall, upon immersion of the honeycomb structured body in the catalyst solution containing a catalyst such as a catalyst metal. For this reason, it is possible to provide a honeycomb structured body in which the catalyst is supported in such a manner that no catalyst supported on the adhesive layer.

(2) In the honeycomb structured body of the present embodiment, the thickness of the cell wall is 0.15 to 0.30 mm. By setting the thickness of the cell wall to this range, the strength of the cell wall can be sufficiently provided. Moreover, upon supporting the catalyst on the cell wall, almost all the catalyst is allowed to serve as a catalyst that contributes to the exhaust-gas converting reaction, thereby making it possible to provide a honeycomb structured body that can reduce the amount of a catalyst that is wastefully supported on the cell wall.

(3) In the honeycomb structured body of the present embodiment, the thickness of the border wall is set to 5 to 20 times thicker than the thickness of the cell wall. In the case where the thickness of the border wall and the thickness of the cell wall are set as described above, the adhesive layer has a sufficient thickness, leading to sufficiently high adhesive strength between the honeycomb fired bodies. Moreover, since the opening area (aperture ratio) of the cells is made sufficiently large, the honeycomb structured body of the present embodiment can be suitably used as an exhaust-gas converting catalyst supporting carrier.

(4) In the honeycomb structured body of the present embodiment, the honeycomb fired body contains the inorganic particles, the inorganic fibers and/or whiskers and the inorganic binder. The honeycomb fired body including these substances has a high specific surface area and sufficient strength; therefore, the honeycomb structured body formed by such honeycomb fired bodies can be suitably used as a catalyst supporting carrier.

The following description will discuss Examples that specifically disclose the first embodiment of the present invention. Here, the present invention is not intended to be limited only by the Examples.

(Example 1) (Process for manufacturing honeycomb fired body) An amount of 2250 g of γ-alumina particles (average particle diameter: 2 µm), 680 g of aluminum borate whiskers (average fiber diameter: 0.5 to 1 µm, average fiber length: 10 to 30 µm) and 2600 g of silica sol (solid concentration: 30% by weight) were mixed. To the obtained mixture were added 320 g of methyl cellulose as the organic binder, 290 g of a lubricant (UNILUB, manufactured by NOF Corporation) and 225 g of a plasticizer (glycerin), and the resulting mixture was further mixed and kneaded to obtain a mixed composition. Next, this mixed composition was extrusion-molded by using an extrusion molding machine to obtain a raw honeycomb molded body.

Next, the raw honeycomb molded body was sufficiently dried by using a microwave drying apparatus and a hot air drying apparatus, and then maintained at a temperature of 400°C for two hours to be degreased to obtain a honeycomb degreased body. Thereafter, the honeycomb degreased body was maintained at a temperature of 800°C for two hours to be fired so that a rectangular pillar-shaped honeycomb fired body (37 mm × 37 mm × 150 mm) having a cell density of 93 pcs/cm² (600 cpsi), a thickness of the cell wall of 0.2 mm and a tetragonal shape (square) in the cross-sectional shape of each cell was obtained.

(Process for forming catalyst permeation preventive region) An amount of 100 g of γ-alumina particles (average particle diameter: 2 µm) and 100 g of silica sol (solid concentration: 30% by weight) were mixed and kneaded to prepare a paste material. This paste material was applied to the peripheral faces of the honeycomb fired body so as to have a thickness of about 100 µm so that the base layer for preventing catalyst permeation was formed.

Silicon oil as the water repellent material was applied to this base layer for preventing catalyst permeation so as to permeate the base layer for preventing catalyst permeation. This layer was further dried at a temperature of 100°C in a hot air drying apparatus for one hour to remove moisture contained in the base layer for preventing catalyst permeation; thus, a catalyst permeation preventive region containing the water repellent material was formed on the peripheral faces of the honeycomb fired body.

(Combining process of honeycomb fired bodies) An amount of 29% by weight of γ-alumina particles (average particle diameter: 2 µm), 7% by weight of aluminum borate whiskers (average fiber diameter: 0.5 to 1 µm, average fiber length: 10 to 30 µm), 34% by weight of silica sol (solid concentration: 30% by weight), 5% by weight of carboxy methylcellulose (CMC) and 25% by weight of water were mixed to prepare an adhesive paste.

The honeycomb fired body having the catalyst permeation preventive region formed thereon was placed on a laminating base having a V-shaped cross-section, with the surface having the catalyst permeation preventive region formed thereon facing up, and the adhesive paste thus prepared was applied to the surface having the catalyst permeation preventive region so that an adhesive paste layer was formed. Subsequently, another honeycomb fired body was placed on the adhesive paste layer in such a manner that the surface having the catalyst permeation preventive region formed thereon makes contact with the adhesive paste layer. The process for applying the adhesive paste to the honeycomb fired body and process for laminating another honeycomb fired body were successively repeated to combine a plurality of honeycomb fired bodies.

Subsequently, the combined honeycomb fired bodies were heated at a temperature 100°C for one hour so that the adhesive paste was dried and solidified to form the adhesive layer; thus, a ceramic block was manufactured.

Next, this ceramic block was cut into a cylindrical shape by using a diamond cutter so as to have an end face with a virtually point-symmetrical pattern with respect to the center of the circle, as shown in Fig. 7(a), and a sealing material paste (the same material as that of the adhesive paste) was then applied to the peripheral face of the ceramic block so as to form a coat layer with a thickness of 0.5 mm; thus, the peripheral face of the ceramic block was coated.

Next, this honeycomb fired body was dried at a temperature of 120°C for one hour so that a cylindrical-shaped honeycomb structured body (143.8 mm in diameter × 75 mm in height) was obtained.

(Supporting of catalyst) The honeycomb structured body was immersed in a solution (platinum solution) of diammine dinitro platinum nitric acid ([[Pt(NH₃)₂(NO₂)₂] HNO₃, platinum concentration of 4.53% by weight), and maintained therein for one minute. Next, this honeycomb structured body was dried at a temperature of 110°C for two hours, and then fired at a temperature of 500°C for one hour in a nitrogen atmosphere so that the platinum catalyst was supported on the honeycomb structured body.

(Observation of border wall) The honeycomb structured body having the platinum catalyst supported thereon was cut, and parts of the outer wall, the catalyst permeation preventive region and the adhesive layer of the honeycomb fired body were cut out. Then, photographs of the respective cut-out sample pieces were taken by using a TEM (FE-TEM HF-2000, manufactured by Hitachi, Ltd.), at a magnification of 50,000 times and an acceleration voltage of 200 kV, and a mapping analysis was carried out thereon by using an EDS method to observe the presence or absence of the catalyst (Pt particles). Table 1 shows the results.

(Example 2) Honeycomb fired bodies were manufactured and a base layer for preventing catalyst permeation layer was formed on each peripheral face of the honeycomb fired bodies, by following the same procedure described in Example 1. Next, a phenolic resin as the cation exchanger was pulverized, and mixed with water to prepare a slurry containing the phenolic resin therein. Moreover, the slurry was applied to the base layer for preventing catalyst permeation so that the phenolic resin is allowed to permeate the base layer for preventing catalyst permeation. The honeycomb fired bodies were dried at 100°C in a hot air drying apparatus for one hour so as to remove moisture contained in the base layer for preventing catalyst permeation; thus, a catalyst permeation preventive region containing the cation exchanger was formed on each peripheral face of the honeycomb fired bodies. Thereafter, the same procedure described in Example 1 was followed to perform the following processes: manufacturing a honeycomb structured body; supporting the catalyst; and observation of a border wall. Table 1 shows the results of the observation of the border wall.

(Example 3) A catalyst permeation preventive region was formed by following the procedure described in Example 2 except that montmorillonite was used as the water absorbing material in place of the phenolic resin. Thereafter, the same procedure described in Example 1 was followed to perform the following processes: manufacturing a honeycomb structured body; supporting the catalyst; and observation of a border wall. Table 1 shows the results of the observation of the border wall.

(Comparative Example 1) A honeycomb structured body was manufactured by following the same procedure described in Example 1 except that an adhesive paste was directly applied to each peripheral face of honeycomb fired bodies without forming a base layer for catalyst permeation preventive and a catalyst permeation preventive region. Thereafter, the catalyst was supported thereon and a border wall was observed. Table 1 shows the results of the observation of the border wall.

**[Table 1]**

| | Catalyst permeation preventive region | Results of observation (Presence or absence of Pt) | | |
|---|---|---|---|---|
| | | Outer wall of honeycomb fired body | Catalyst permeation preventive region | Adhesive layer |
| Example 1 | silicone oil | Presence | Absence | Absence |
| Example 2 | Phenolic resin | Presence | Presence | Absence |
| Example 3 | Montmorillonite | Presence | Presence | Absence |
| Comparative Example 1 | Absence | Presence | Presence | Presence |

As clearly shown in Table 1, the results of the analysis using the EDS method shows that, in the case where the catalyst was supported on the honeycomb structured bodies manufactured in respective Examples each of which has the catalyst permeation preventive region and the catalyst supported thereon, no Pt atoms (catalyst) were observed in the adhesive layer. The results indicate that each of the honeycomb structured bodies manufactured in respective Examples has a small amount of the catalyst wastefully supported thereon. In the honeycomb structured body having the catalyst permeation preventive region containing the water repellent material as described in Example 1, the catalyst was supported on the outer wall of the honeycomb fired body. Moreover, in the honeycomb structured body having the catalyst permeation preventive region containing the water absorbing material as described in Example 3 as well as the honeycomb structured body having the catalyst permeation preventive region containing the cation exchanger as described in Example 2, the catalyst was supported also on the catalyst permeation preventive region. The results indicate that in Example 1, the catalyst solution containing the catalyst metal is allowed to permeate the outer wall of the honeycomb fired body, and that in Examples 2 and 3, the catalyst solution is allowed to permeate the catalyst permeation preventive regions.

In contrast, in the case where the catalyst was supported on the honeycomb structured body manufactured in Comparative Example 1 which has no catalyst permeation preventive region, the catalyst was also supported on the adhesive layer. The results indicate that in Comparative Example 1, the catalyst solution containing the catalyst metal permeated the adhesive layer.

(SECOND EMBODIMENT) The honeycomb structured body according to the present embodiment is provided with a catalyst permeation preventive region that is placed not between an adhesive layer and outer wall of a honeycomb fired body, but in the outer wall of the honeycomb fired body. As described in the first embodiment, the catalyst permeation preventive region contains at least one kind of material selected from the group consisting of the water repellent material, the cation exchanger and the water absorbing material, and the other structures are the same as those of the honeycomb structured body of the first embodiment. In the honeycomb structured body of the present embodiment, a position where the catalyst permeation preventive region is provided is not particularly limited, as long as the catalyst permeation preventive region is located within the outer wall of the honeycomb fired body, and it may be placed at one portion of the outer wall of the honeycomb fired body, or may be placed over the entire portion of the outer wall of the honeycomb fired body.

With reference to the figures, the following description will discuss the functions of the respective catalyst permeation preventive regions in the honeycomb structured body of the present embodiment, which is provided with the catalyst permeation preventive regions each containing any of the water repellent material, the cation exchanger and the water absorbing material.

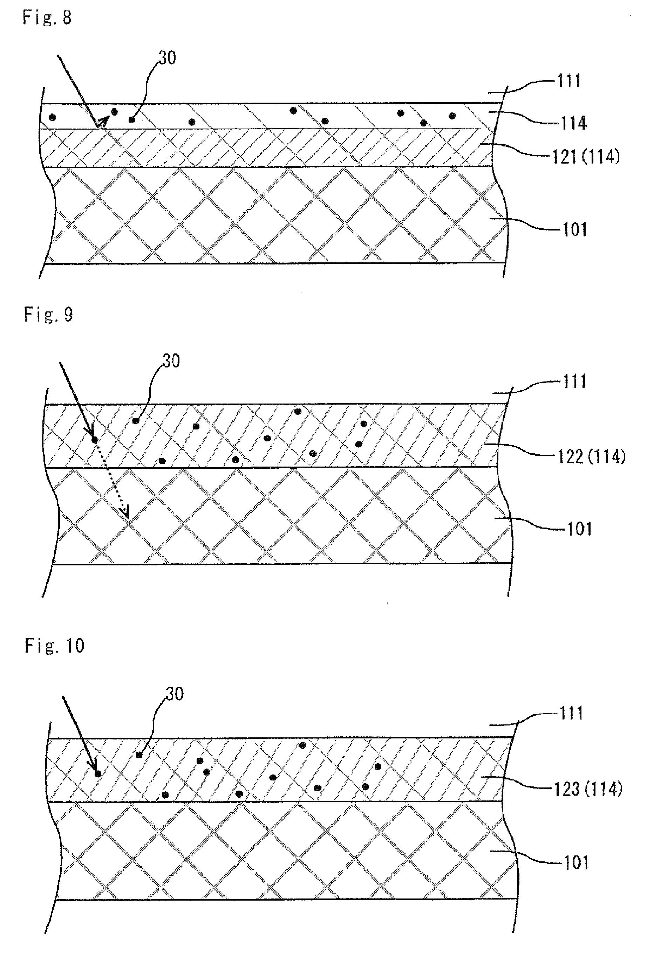

Fig. 8 is a schematic cross-sectional view showing the neighborhood of a catalyst permeation preventive region obtained by cutting a honeycomb structured body having a catalyst permeation preventive region containing the water repellent material formed in the outer wall of the honeycomb fired body, in parallel with its longitudinal direction. In the honeycomb structured body shown in Fig. 8, a catalyst permeation preventive region 121 containing the water repellent material is formed as a layer occupying an approximately half region of the outer wall 114 of the honeycomb fired body in the thickness direction of the outer wall 114.

In Fig. 8, an arrow indicated by a solid line shows a flow of a catalyst solution containing a catalyst metal. When the honeycomb structured body shown in Fig. 8 is immersed in the catalyst solution, the catalyst solution permeates the outer wall 114 from the cells 111; however, since the catalyst permeation preventive region 121 containing the water repellent material is formed in the outer wall 114, the contact of the catalyst solution with the catalyst permeation preventive region 121 results in repelling of the catalyst solution by the water repellent material contained in the catalyst permeation preventive region 121. Consequently, the catalyst solution fails to permeate the catalyst permeation preventive region 121, and fails to further permeate an adhesive layer 101 located ahead of the catalyst permeation preventive region 121.
Therefore, no catalyst metal 30 is allowed to reach the adhesive layer 101 so that it is possible to prevent the catalyst metal 30 from being supported on the adhesive layer 101.

Fig. 9 is a schematic cross-sectional view showing the neighborhood of a catalyst permeation preventive region obtained by cutting one example of a honeycomb structured body having a catalyst permeation preventive region containing a cation exchanger in the outer wall of a honeycomb fired body, in parallel with its longitudinal direction. In the honeycomb structured body shown in Fig. 9, the cation exchanger is contained in the outer wall 114, and thereby the entire outer wall 114 is allowed to function as the catalyst permeation preventive region 122 containing the cation exchanger.

In Fig. 9, an arrow indicated by a solid line shows a flow of a catalyst solution containing a catalyst metal, while an arrow indicated by a dotted line shows a flow of a solution without the catalyst metal contained therein. When the honeycomb structured body shown in Fig. 9 is immersed in the catalyst solution, the catalyst solution permeates the outer wall 14 from the cells 111; however, since the cation exchanger is contained in the outer wall 114 (catalyst permeation preventive region 122) , the catalyst metal 30, contained in the catalyst solution permeating the outer wall 114, makes contact with the cation exchanger in the outer wall 114. Then, cations contained in the cation exchanger are exchanged by the catalyst metal 30 and the catalyst metal 30 is combined with the cation exchanger. Consequently, the catalyst metal 30 is combine with the cation exchanger so as to remain in the outer wall 114. Therefore, since the catalyst metal 30 is not allowed to reach the adhesive layer 101 located ahead of the outer wall, it is possible to prevent the catalyst metal 30 from being supported on the adhesive layer 101.

Fig. 10 is a schematic cross-sectional view showing the neighborhood of a catalyst permeation preventive region obtained by cutting one example of a honeycomb structured body having a catalyst permeation preventive region containing the water absorbing material formed in the outer wall of a honeycomb fired body, in parallel with its longitudinal direction. In the honeycomb structured body shown in Fig. 10, the water absorbing material is contained in the outer wall 114, and thereby the entire outer wall 114 is allowed to function as a catalyst permeation preventive region 123 containing the water absorbing material.

In Fig. 10, an arrow indicated by a solid line shows the flow of the catalyst solution containing the catalyst metal. When the honeycomb structured body shown in Fig. 10 is immersed in the catalyst solution, the catalyst solution permeates the outer wall 114 from the cells 111; however, since the water absorbing material is contained in the outer wall 114 (catalyst permeation preventive region 123), the catalyst metal 30 contained in the catalyst solution permeating the outer wall 114 makes contact with the water absorbing material together with water in the catalyst solution. Here, since both of the catalyst metal 30 and water contained in the catalyst solution are absorbed by the water absorbing material, the catalyst metal 30, which has made contact with the water absorbing material, remains in the outer wall 114 together with water. Consequently, the catalyst metal 30 is not allowed to reach the adhesive layer 101 located ahead of the outer wall 114 so that it is possible to prevent the catalyst metal 30 from being supported on the adhesive layer 101.

Next, the following description will discuss a method for manufacturing the honeycomb structured body according to the present embodiment; however, since the process different from that of the method for manufacturing the honeycomb structured body of the first embodiment is only a process for forming a catalyst permeation preventive region, the description of the other processes will be omitted.

First, the following description will discuss an example in which silicone oil is used as the water repellent material in the process for forming the catalyst permeation preventive region. Since the honeycomb fired body comprises a porous ceramic, the silicone oil is applied to the peripheral faces of the honeycomb fired body so as to permeate the outer wall of the honeycomb fired body. Then, the honeycomb fired body having the outer wall in which the silicone oil has been permeated is dried so that the region, in which the silicone oil has permeated, of the outer wall of the honeycomb fired body is allowed to function as the catalyst permeation preventive region. By changing the amount of the silicone oil to apply, the viscosity of the silicone oil and the porosity of the honeycomb fired body and the like, the depth (thickness) of the catalyst permeation preventive region can be adjusted on demand. Here, by allowing the silicone oil to permeate halfway in the thickness direction of the outer wall, a layer-state catalyst permeation preventive region as shown in Fig. 8 can be formed in one portion of the outer wall of the honeycomb fired body.

Next, the following description will discuss an example in which a solution (slurry) containing any of the water repellent material, the cation exchanger and the water absorbing material is used in the process for forming the catalyst permeation preventive region. First, the slurry is prepared by following the same procedure for manufacturing the honeycomb structured body as described in the first embodiment. Subsequently, the slurry is applied to the peripheral faces of the honeycomb fired body. Since the honeycomb fired body comprises a porous ceramic, the slurry is allowed to permeate the outer wall of the honeycomb fired body so that the water repellent material, the cation exchanger or the water absorbing material is gradually supported on the pores of the honeycomb fired body. Then, the honeycomb fired body with any of these substances being permeated therein is dried, and thereby the region in which the slurry has permeated is allowed to function as the catalyst permeation preventive region. By changing the amount of the coated slurry, the viscosity of the slurry and the porosity of the honeycomb fired body and the like, the depth (thickness) of the catalyst permeation preventive region can be adjusted on demand. Here, by allowing the slurry to permeate the entire portions of the outer wall in the thickness direction of the outer wall, a catalyst permeation preventive region as shown in Figs. 9 and 10 can be formed over the entire outer wall of the honeycomb fired body.

In addition to the effects (2) to (4) described in the first embodiment, the present embodiment makes it possible to exert the following effects. (5) In the honeycomb structured body of the present embodiment, the catalyst permeation preventive region is provided in the outer wall of the honeycomb fired body. The component contained in the catalyst permeation preventive region functions to prevent the catalyst metal from permeating the adhesive layer from the outer wall, upon immersion of the honeycomb structured body in the catalyst solution containing a catalyst such as a catalyst metal and the like. For this reason, it is possible to provide a honeycomb structured body in which the catalyst is supported in such a manner that the adhesive layer has no catalyst supported thereon.

The following description will discuss Examples that specifically disclose the second embodiment of the present invention. Here, the present invention is not intended to be limited only by these Examples.

(Example 4) Honeycomb fired bodies were manufactured by following the same procedure as described in Example 1, and in the process for forming a catalyst permeation preventive region, silicone oil as the water repellent material was thinly applied to the peripheral face of each honeycomb fired body so as to permeate the outer wall of the honeycomb fired body.
The honeycomb fired bodies were further dried at a temperature of 100°C in a hot air drying apparatus for one hour so that a catalyst permeation preventive region containing the water repellent material was formed in each outer wall of the honeycomb fired bodies. Thereafter, the same procedure described in Example 1 was followed to perform the following processes: manufacturing a honeycomb structured body; supporting the catalyst; and observation of a border wall. Here, sample pieces were cut out from the outer wall and the adhesive layer respectively, and used for the observation of the border wall. The results show that, although the catalyst was supported on the outer wall of the honeycomb fired body, almost no catalyst was supported on the adhesive layer.

(Example 5) Honeycomb fired bodies were manufactured by following the same procedure as described in Example 1, and a phenolic resin as the cation exchanger was pulverized and mixed with water to prepare a slurry. The slurry was applied to the peripheral face of the honeycomb fired bodies so that the slurry containing the phenolic resin is allowed to permeate the outer wall of the honeycomb fired bodies. Moreover, the honeycomb fired bodies were further dried at a temperature of 100°C in a hot air drying apparatus for one hour to remove the moisture contained in the slurry; thus, the catalyst permeation preventive region containing the cation exchanger was formed in each outer wall of the honeycomb fired bodies.
Thereafter, the same procedure described in Example 4 was followed to perform the following processes: manufacturing a honeycomb structured body; supporting the catalyst; and observation of a border wall. The results show that, although the catalyst was supported on the outer wall of the honeycomb fired body, no catalyst was supported on the adhesive layer.

(Example 6) A catalyst permeation preventive region was formed by following the procedure described in Example 5 except that montmorillonite was used as the water absorbing material in place of the phenolic resin. Thereafter, the same procedure described in Example 4 was followed to perform the following processes: manufacturing a honeycomb structured body; supporting the catalyst; and observation of a border wall. The results show that, although the catalyst was supported on the outer wall of the honeycomb fired body, no catalyst was supported on the adhesive layer.

The results show that in the honeycomb structured bodies having the catalyst permeation preventive region in the outer wall of each honeycomb fired body, the catalyst solution containing the catalyst metal fails to permeate the adhesive layer, thereby making it possible to prevent the catalyst metal from being wastefully supported on the adhesive layer.

(THIRD EMBODIMENT) In the honeycomb structured body of the present embodiment, the water repellent material is contained in the adhesive layer. In the honeycomb structured body of the present embodiment, no region corresponding to the catalyst permeation preventive region is provided, and the other structures are the same as those of the first embodiment.

In the present embodiment, since the adhesive layer contains the water repellent material, it is possible to prevent the catalyst from being supported on the adhesive layer. Fig. 6 is a schematic cross-sectional view showing the neighborhood of an adhesive layer obtained by cutting one example of a honeycomb structured body having an adhesive layer containing the water repellent material, in parallel with its longitudinal direction. In Fig. 6, an arrow indicated by a solid line shows a flow of a catalyst solution containing a catalyst metal. When the honeycomb structured body shown in Fig. 6 is immersed in the catalyst solution, the catalyst solution permeates the outer wall 114 from the cell 111 so that the catalyst metal 30 contained in the catalyst solution is gradually supported on the outer wall 114. Moreover, the catalyst solution that has permeated the deepest end (downward in Fig. 6) of the outer wall 114 makes contact with an adhesive layer 201 containing the water repellent material. Here, the adhesive layer 201 contains the water repellent material, and the water repellent material has such a property that it repels water upon contact with water. For this reason, the contact of the catalyst solution with the water repellent material results in repelling of the catalyst solution by the water repellent material contained in the adhesive layer 201. As a result, the catalyst solution fails to permeate the adhesive layer 201. Therefore, no catalyst metal 30 is allowed to reach the adhesive layer 201, so that it is possible to prevent the catalyst metal 30 from being supported on the adhesive layer 201. Moreover, although not particularly limited, examples of the substance to be used as the water repellent material include the substances described in the first embodiment.

Next, the following description will discuss a method for manufacturing a honeycomb structured body according to the present embodiment; however, since the point different from that of the method for manufacturing the honeycomb structured body of the first embodiment is only a composition of the adhesive paste, the description of the other processes will be omitted.

In the present embodiment, the water repellent material is added to the adhesive paste described in the method for manufacturing the honeycomb structured body of the first embodiment to prepare an adhesive paste containing the water repellent material. Examples of the water repellent material include silicone oil, wax, glass and the like.

Here, an adhesive paste layer is formed between adjacent honeycomb fired bodies by using the adhesive paste containing the water repellent substance. Then, the adhesive paste layer is dried and solidified so that the honeycomb fired bodies are bonded with one another with the adhesive layer containing the water repellent material interposed therebetween. By following these processes, the adhesive layer containing the water repellent substance can be formed.

In addition to the effects (2) to (4) explained in the first embodiment, the present embodiment makes it possible to exert the following effect. (6) In the honeycomb structured body of the present embodiment, the water repellent material is contained in the adhesive layer. When the honeycomb structured body is immersed in the catalyst solution, the catalyst solution permeates the adhesive layer as far as a region that is in contact with the outer wall of the honeycomb fired body; however, since the adhesive layer contains the water repellent material, the water repellent material serves as a blocking wall (barrier) so that the catalyst solution is prevented from permeating the inside of the adhesive layer. Thus, it is possible to reduce the amount of the catalyst that is wastefully supported on the border wall by preventing the catalyst from being supported on the inside of the adhesive layer.

The following description will discuss Example that specifically discloses the third embodiment of the present invention. Here, the present invention is not intended to be limited only by this Example.

(Example 7) Honeycomb fired bodies were manufactured by following the same procedure as described in Example 1. Separately, the same adhesive paste as that of Example 1 was prepared, and to this adhesive paste was added 5 parts by weight of silicone oil as the water repellent material with respect to 100 parts by weight of the adhesive paste so that an adhesive paste containing the water repellent material was prepared. By using this adhesive paste, a plurality of honeycomb fired bodies were combined in the same manner as in Example 1, and the same procedure described in Example 1 was followed to perform the following processes: manufacturing a honeycomb structured body; supporting the catalyst; and observation of a border wall. Here, sample pieces were cut out from the outer wall and the adhesive layer respectively, and used for the observation of the border wall. The results show that, although the catalyst was supported on the outer wall of the honeycomb fired body, no catalyst was supported on the adhesive layer. Here, in the present embodiment, the formation of the base layer for preventing catalyst permeation and the process for forming the catalyst permeation preventive region were not carried out.

(OTHER EMBODIMENTS) Although not particularly limited, the shape of the honeycomb fired body is preferably designed so as to allow the honeycomb fired bodies to be easily combined with one another, and examples of the shape of the cross section perpendicular to the longitudinal direction include a square, rectangular, hexagonal, sector shape and the like.

With respect to the cell density of the honeycomb fired body, the lower limit thereof is preferably 15.5 pcs/cm² (100 cpsi), more preferably 46.5 pcs/cm² (300 cpsi), further more preferably 62.0 pcs/cm² (400 cpsi). The upper limit of the cell density is preferably 186 pcs/cm² (1200 cpsi), more preferably 170.5 pcs/cm² (1100 cpsi), further more preferably 155 pcs/cm² (1000 cpsi). The cell density of less than 15.5 pcs/cm² causes a smaller area of the wall to make contact with exhaust gases inside the honeycomb fired body, and the cell density of more than 186 pcs/cm² causes difficulties in manufacturing the honeycomb fired bodies in addition to high pressure loss.

Although not particularly limited, the thickness of the coat layer of the honeycomb structured body is preferably from 0.1 to 2 mm. The thickness of less than 0.1 mm is unlikely to sufficiently protect the peripheral faces, resulting in failure to increase the strength; in contrast, the thickness of more than 5 mm makes a specific surface area of the honeycomb structured body per unit volume smaller, possibly resulting in insufficient high dispersion of the catalyst, in use of the honeycomb structured body as a catalyst supporting carrier for converting exhaust gases.

With respect to the amount of the inorganic particles contained in the honeycomb fired body, the lower limit is preferably 30 % by weight, more preferably 40 % by weight, further more preferably 50 % by weight. The upper limit thereof is preferably 97 % by weight, more preferably 98 % by weight, further more preferably 80 % by weight, particularly preferably 75 % by weight. The content of the inorganic particles of less than 30 % by weight makes an amount of inorganic particles that contribute to improvements of the specific surface area relatively smaller, and thereby makes a specific surface area of the honeycomb fired body smaller, resulting in insufficient high dispersion of catalyst components upon supporting of the catalyst components. In contrast, the content of the inorganic particles of more than 97 % by weight makes an amount of inorganic fibers and/or whiskers that contribute to improvements of the strength relatively smaller, and thereby causes a reduction in the strength of the honeycomb fired body.

With respect to the total amount of the inorganic fibers and/or whiskers contained in the honeycomb fired body, the lower limit is preferably 3 % by weight, more preferably 5 % by weight, further more preferably 8 % by weight. The upper limit thereof is preferably 70 % by weight, more preferably 50 % by weight, further more preferably 40 % by weight, particularly preferably 30 % by weight. The content of the inorganic fibers and/or whiskers of less than 3 % by weight tends to cause a reduction in the strength of the honeycomb fired body; in contrast, the content of the inorganic fibers and/or whiskers of more than 70 % by weight makes an amount of inorganic particles that contribute to improvements of the specific surface area relatively smaller, and thereby makes a specific surface area of the honeycomb structured body (honeycomb fired body) smaller, resulting in insufficient high dispersion of catalyst components upon supporting of the catalyst components.

Moreover, the honeycomb fired body is preferably manufactured by using a raw material composition which is a mixture containing the inorganic particles, the inorganic fibers and/or whiskers and the inorganic binder. By using such a raw material composition containing the inorganic binder, the honeycomb fired body with sufficient strength can be obtained even when the honeycomb molded body is fired at a low temperature.

With respect to the amount of the inorganic binder contained in the raw material composition, the lower limit thereof as a solid component is preferably 5% by weight to the total amount of the solid components including the inorganic particles, the inorganic fibers and/or whiskers and the inorganic binder contained in the raw material composition, more preferably 10% by weight, further more preferably 15% by weight. The upper limit thereof is preferably 50% by weight, more preferably 40% by weight, further more preferably 35% by weight. The amount of the inorganic binder of less than 5% by weight tends to cause a reduction in the strength of the manufactured honeycomb fired body; in contrast, the amount of the inorganic binder of more than 50% by weight tends to cause degradation of the moldability of the raw material composition.

Although not particularly limited, examples of the plasticizer contained in the raw material composition include glycerin and the like. In addition, although not particularly limited, examples of the lubricant include polyoxy alkylene-based compounds, such as polyoxy ethylene alkylether and polyoxy propylene alkylether and the like. Specific examples of the lubricant include polyoxy ethylene monobutyl ether, polyoxy propylene monobutyl ether and the like. Here, the plasticizer and lubricant may not be contained in the raw material composition on demand.

Moreover, although not particularly limited, examples of the dispersant contained in the raw material composition include water, an organic solvent (benzene or the like) alcohol (methanol or the like) and the like. Although not particularly limited, examples of the forming auxiliary include ethylene glycol, dextrin, fatty acid, fatty acid soap, polyalcohol and the like.

### BRIEF DESCRIPTION OF THE DRAWINGS

Fig. 1 is a front view showing a part of an end face of an aggregated honeycomb structured body. Fig. 2 is a schematic cross-sectional view showing the neighborhood of a border wall obtained by cutting one example of a honeycomb structured body having a catalyst permeation preventive region in parallel with its longitudinal direction. Fig. 3 is schematic cross-sectional view showing the neighborhood of a catalyst permeation preventive region obtained by cutting one example of a honeycomb structured body having a catalyst permeation preventive region containing a water repellent material, in parallel with its longitudinal direction. Fig. 4 is a schematic cross-sectional view showing the neighborhood of a catalyst permeation preventive region obtained by one example of a honeycomb structured body having a catalyst permeation preventive region containing a cation exchanger, in parallel with its longitudinal direction. Fig. 5 is a schematic cross-sectional view showing the neighborhood of a catalyst permeation preventive region obtained by cutting one example of a honeycomb structured body having a catalyst permeation preventive region containing a water absorbing material, in parallel with its longitudinal direction. Fig. 6 is a schematic cross-sectional view showing the neighborhood of an adhesive layer obtained by cutting one example of a honeycomb structured body having an adhesive layer containing a water repellent material, in parallel with its longitudinal direction. Fig. 7 (a) is a perspective view schematically showing one example of a honeycomb structured body of the present invention, and Fig. 7(b) is a perspective view schematically showing one example of a honeycomb fired body. Fig. 8 is a schematic cross-sectional view showing the neighborhood of a catalyst permeation preventive region obtained by cutting a honeycomb structured body having a catalyst permeation preventive region containing a water repellent material in the outer wall of the honeycomb fired body, in parallel with its longitudinal direction. Fig. 9 is a schematic cross-sectional view showing the neighborhood of a catalyst permeation preventive region obtained by cutting one example of a honeycomb structured body having a catalyst permeation preventive region containing a cation exchanger in the outer wall of the honeycomb fired body, in parallel with its longitudinal direction. Fig. 10 is a schematic cross-sectional view showing the neighborhood of a catalyst permeation preventive region obtained by cutting one example of a honeycomb structured body having a catalyst permeation preventive region containing a water absorbing material in the outer wall of the honeycomb fired body, in parallel with its longitudinal direction.

### EXPLANATION OF SYMBOLS

10 Border wall 20 Catalyst permeation preventive region 21, 121 Catalyst permeation preventive region containing a water repellent material 22, 122 Catalyst permeation preventive region containing a cation exchanger 23, 123 Catalyst permeation preventive region containing a water absorbing material 30 Catalyst metal (catalyst) 100 Honeycomb structured body 101 Adhesive layer 110, 110a, 110b Honeycomb fired body 111, 111a, 111b Cell 113, 113a, 113b Cell wall 114, 114a, 114b Outer wall 201 Adhesive layer containing a water repellent material

## Claims

1. A honeycomb structured body comprising:
a plurality of pillar-shaped honeycomb fired bodies combined with one another with an adhesive layer interposed therebetween, each of said honeycomb fired bodies having a large number of cells longitudinally placed in parallel with one another with a cell wall therebetween and an outermost peripheral face surrounded by an outer wall,
wherein said cell wall has a thickness of 0.15 to 0.30 mm,
a border wall formed by said adhesive layer and the outer walls of the two honeycomb fired bodies positioned on both sides of said adhesive layer,
a thickness of said border wall is 5 to 20 times greater than the thickness of said cell wall, and
a catalyst permeation preventive region is provided in said outer wall or between said outer wall and said adhesive layer, said catalyst permeation preventive region containing at least one kind selected from the group consisting of a water repellent material, a cation exchanger and a water absorbing material.

2. The honeycomb structured body according to claim 1,
wherein said catalyst permeation preventive region contains the water repellent material and said water repellent material comprises silicone oil, wax, or glass.

3. The honeycomb structured body according to claim 1,
wherein said catalyst permeation preventive region contains the cation exchanger and said cation exchanger comprises a phenolic resin.

4. The honeycomb structured body according to claim 1,
wherein said catalyst permeation preventive region contains the water absorbing material and said water absorbing material comprises montmorillonite, saponite, vermiculite, a high porosity adhesive, or a water absorbing polymer.

5. The honeycomb structured body according to any of claims 1 to 4,
wherein said honeycomb fired body comprises inorganic particles, inorganic fibers and/or whiskers and an inorganic binder.

6. The honeycomb structured body according to claim 5,
wherein said inorganic particles comprise at least one kind selected from the group consisting of alumina, silica, zirconia, titania, ceria, mullite and zeolite.

7. The honeycomb structured body according to claim 5 or 6,
wherein said inorganic fibers and/or whiskers comprise at least one kind selected from the group consisting of alumina, silica, silicon carbide, silica-alumina, glass, potassium titanate and aluminum borate.

8. The honeycomb structured body according to any of claims 5 to 7,
wherein said inorganic binder comprises at least one kind selected from the group consisting of alumina sol, silica sol, titania sol, water glass, sepiolite and attapulgite.

9. A honeycomb structured body comprising:
a plurality of pillar-shaped honeycomb fired bodies combined with one another with an adhesive layer interposed therebetween, each of said honeycomb fired bodies having a large number of cells longitudinally placed in parallel with one another with a cell wall therebetween and an outermost peripheral face surrounded by an outer wall,
wherein said cell wall has a thickness of 0.15 to 0.30 mm,
a border wall, formed by said adhesive layer and the outer walls of the two honeycomb fired bodies positioned on both sides of said adhesive layer,
a thickness of said border wall is 5 to 20 times greater than the thickness of said cell wall, and
said adhesive layer contains a water repellent material.

10. The honeycomb structured body according to claim 9,
wherein said water repellent material comprises silicone oil, wax, or glass.

11. The honeycomb structured body according to claim 9 or 10,
wherein said honeycomb fired body comprises inorganic particles, inorganic fibers and/or whiskers and an inorganic binder.

12. The honeycomb structured body according to claim 11,
wherein said inorganic particles comprise at least one kind selected from the group consisting of alumina, silica, zirconia, titania, ceria, mullite and zeolite.

13. The honeycomb structured body according to claim 11 or 12,
wherein said inorganic fibers and/or whiskers comprise at least one kind selected from the group consisting of alumina, silica, silicon carbide, silica-alumina, glass, potassium titanate and aluminum borate.

14. The honeycomb structured body according to any of claims 11 to 13,
wherein said inorganic binder comprises at least one kind selected from the group consisting of alumina sol, silica sol, titania sol, water glass, sepiolite and attapulgite.
